# EUROPEAN PATENT SPECIFICATION

(11) **EP 2 350 407 B1**
(45) Date of publication and mention of the grant of the patent: **19.06.2019**
(21) Application number: 09744433.5
(22) Date of filing: 16.10.2009
(51) Int. Cl.: E04G 23/02, C23F 13/02

(54) **SACRIFICIAL ANODES IN CONCRETE PATCH REPAIR**
OPFERANODEN BEI BETONAUSBESSERUNGEN
ANODES SACRIFICIELLES DANS UNE RÉPARATION LOCALISÉE DE BÉTON

(30) Priority: 17.10.2008 GB 0818984
(43) Date of publication of application: 03.08.2011
(73) Proprietor: Glass, Gareth, Lichfield Staffordshire WS14 9DQ (GB); Roberts, Adrian, Chilwell, Nottinghamshire NG9 5HG (GB); Davison, Nigel, Swadlincote, Derbyshire DE12 8DG (GB)
(72) Inventor: Glass, Gareth, Lichfield Staffordshire WS14 9DQ (GB); Roberts, Adrian, Chilwell, Nottinghamshire NG9 5HG (GB); Davison, Nigel, Swadlincote, Derbyshire DE12 8DG (GB)
(74) Representative: Gill Jennings & Every LLP
(86) International application number: PCT/GB2009/051386
(87) International publication number: WO 2010/043908

(56) References cited:
- CA-C- 1 275 775
- JP-A- 2003 160 885
- US-A1- 2007 194 774
- US-A1- 2007 295 612
- US-A1- 2008 105 564
- US-A1- 2008 202 941
- US-A1- 2008 230 398
- US-B1- 6 958 116

## Description

### Technical Field

This invention is related to the galvanic protection of steel in concrete and in particular to the use of sacrificial anodes to protect steel reinforcement in concrete construction at locations where the reinforced concrete is subject to patch repair as the result of corrosion induced damage.

### Background Art

Steel reinforced concrete structures suffer corrosion induced damage as the result of carbonation or chloride contamination of the concrete. The steel reinforcement corrodes to produce products that occupy a larger volume than the steel from which the products are derived. As a result expansion occurs around reinforcing steel bars. This causes cracking and delamination of the concrete cover to the steel. Repairs involve removing this patch of damaged concrete. It is good practice to remove the concrete (break it out) behind the corroding steel and to remove as much of the contaminated concrete and corrosion product as possible. The concrete profile is then restored with a compatible cementitious repair concrete or mortar that is free from contaminants and further corrosion is inhibited within this repair material. The concrete then consists of the parent concrete (remaining original concrete) and the profile restoring repair material at the patch. Previous research has resulted in the generation of a number of competing high performance concrete repair materials. These include polymer modified cementitious concretes or mortars (profile restoring repair materials), and profile restoring material to parent concrete bonding aids (bonding coatings or agents).

The parent concrete adjacent to the repair area is likely to contain some aggressive contaminants as the result of its exposure to the environment that caused the damage at the repair area. Furthermore it is widely believed that the couple of steel in the parent concrete with steel in the repair concrete promotes corrosion initiation on the steel in the parent concrete. This is termed the incipient anode, ring anode or halo effect. Sacrificial anode assemblies may be tied to the steel exposed in the repair area to provide galvanic protection to the steel that is in the adjacent parent concrete prior to covering the steel and restoring the concrete profile with a repair material. One example is shown in Repair Application Procedure number 8 published by the American Concrete Institute (ACI). The anode assembly typically comprises a pre-assembled anode and backfill wherein the backfill receives the products of sacrificial metal dissolution. The backfill usually contains an activating agent and the assembly forms a rigid assembly that can be tied to the steel exposed in the cavity formed by the removal of the damaged concrete. Patent application US 2007/0295612 discloses a porous sacrificial anode comprising an activating agent, that can be inserted as a tight fit into a drilled hole or assembled as an array onto an existing layer of damaged concrete.

One problem with placing a sacrificial anode assembly in a cavity formed by the removal of the corrosion damaged concrete is that the current delivered to the steel in the adjacent parent concrete depends on the resistivity of the concrete repair materials used. Repair materials with a high resistance to the ingress of aggressive contaminants also tend to have a high electrical resistivity, but a high electrical resistivity of the repair material reduces the current output of the anode and therefore the protection current delivered to the steel in the parent concrete adjacent to the repair. An existing solution to this problem is to use a low resistivity mortar (a bridging mortar) to connect the preformed anode assembly tied to the steel to the original (parent) concrete prior to installing the concrete repair materials. However this compromises the quality of the repair material and increases the number of interfaces between the sacrificial anode and the parent concrete where further problems may occur as the result of dimensional changes in the repair materials as they harden. The European standard for the cathodic protection of steel in concrete (BS EN 12696:2000) limits the resistivity of repair materials to less than twice the resistivity of the parent concrete.

Another problem is that bonding aids that substantially comprise polymers (resistive or insulating bonding agents) are currently prohibited in the European Standard for the cathodic protection of steel in concrete (BS EN 12696:2000). Bonding aids are used to enhance the bond between the repair material and the parent concrete, but may also inhibit current flowing from an anode in the concrete repair material to the steel in the parent concrete.

### Summary of the Invention

A solution to these problems is to form another distinct cavity (an anode cavity) within the parent concrete exposed in the cavity prepared to receive the concrete repair material (the first cavity) wherein the anode cavity is adapted for the assembly of a sacrificial anode, activating agent and backfill. A preferred example of the anode cavity is a hole cored or drilled into the parent concrete exposed in the first cavity. The anode cavity has a substantially smaller volume than the first cavity. The sacrificial anode and activating agent and backfill is then assembled within this anode cavity and connected to the exposed steel in the first cavity with a suitable conductor, examples of which are known in the art. The sacrificial anode assembly includes a sacrificial anode, a pliable viscous backfill, an activating agent and a connecting conductor. The conductor is used to electronically connect the sacrificial anode in the anode cavity to the steel in the first cavity and hence allow electrons to flow from the anode to the steel. The anode may easily be connected to the exposed steel in the first cavity using an uninsulated wire connected to the anode that runs to the steel and is then clamped or tied to the steel using another length of uninsulated wire to keep this connection detail simple. The pliable viscous backfill is preferably a putty and is preferably stored in a container and is preferably directly injected from the container into the anode cavity by applying pressure to the container and therefore the backfill in the container. The backfill is preferably dispensed in the same way that a silicone sealant is dispensed from a sealant cartridge. The backfill preferably has a shelf life of at least 1 month wherein it can be assembled and stored ready for use. The backfill preferably hardens slowly to form a weak porous material. The backfill receives the products that arise from the sacrificial anode reaction commonly termed sacrificial anode dissolution. These products may be expansive and the backfill is preferably weak and has void space. The backfill connects to the sacrificial anode in a way that allows the products of the sacrificial anode reaction to enter the backfill. The backfill is preferably in direct contact with the sacrificial anode or activating agent applied as a coating to the sacrificial anode. The backfill is used to ionically connect the sacrificial anode to the parent concrete and hence allow ionic current to flow from the anode through the parent concrete to the steel in the parent concrete. The activating agent may be included within the anode or within the backfill or applied as a coating to the anode. It is preferably included with the anode to limit its diffusion into the parent concrete. The concrete repair material that is used to fill the first cavity to restore the concrete profile covers the sacrificial anode assembly in the anode cavity. The sacrificial anode and the relatively weak backfill are then protected from the weathering environment by this concrete repair material. No further protection is required. The protection current flows as ions from the sacrificial anode through the backfill into the parent concrete to the steel and returns as electrons through the steel and conductor to the sacrificial anode. The ionic current needs to cross no more than 1 interface between the backfill and the parent concrete in the process. The profile restoring repair material preferably has a higher resistivity than the parent concrete in the vicinity of the anode to promote the flow of current to the steel in the parent concrete. It is preferable that the resistivity of the profile restoring repair material is at least double that of the parent concrete and more preferably at least 3 times that of the parent concrete in the vicinity of the anode. Repair material bonding aids that substantially comprise polymers may also be applied to the parent concrete exposed in the first cavity to enhance the bond between the profile restoring repair material and the parent concrete and to promote the flow of current from the sacrificial anode directly to the parent concrete and to prevent the steel in the parent concrete from being ionically coupled to the steel in the contaminant free repair material to minimize the incipient anode, ring anode or halo effect.

### Advantageous Effects

The arrangement disclosed above promotes current flow to the steel in the parent concrete where it is needed. The anode assembly is protected from the weathering environment by the profile restoring repair material and an additional process is not required to achieve this protection. The anode is easily connected to the neighbouring steel exposed in the concrete repair cavity. The number of interfaces through the ionically conductive medium is minimised. Dispensing the backfill from a container by injecting it directly from the container into the anode cavity simplifies the installation process. Including the activating agent with the anode keeps the activating agent where it is required to be effective. High resistivity concrete profile restoring materials and bonding aids may be used to further promote the flow of current to steel in the original parent concrete where it is most needed. Examples include materials containing silica fume that are applied by a dry or wet spray process. The quality of the concrete repair need not be compromised by a need for the profile restoring repair material and bonding aid to readily conduct ionic current as is currently required in national standards for cathodic protection (e.g. BS EN 12696:2000). Indeed it is preferable that ionic current between the parent and repair concrete is inhibited in the arrangement disclosed above.

### Detailed Description

This invention provides in one aspect a method of repairing a corrosion damaged steel reinforced concrete structure which comprises
removing the corrosion damaged concrete to expose and clean the corroding steel and to form a first cavity to receive a concrete repair material to restore the profile of the concrete structure and
forming in the concrete exposed within this first cavity a smaller distinct anode cavity for assembling a sacrificial anode assembly and
placing within the anode cavity a pliable viscous ionically conductive backfill and a sacrificial anode and an activating agent to form a sacrificial anode assembly and
connecting the sacrificial anode to the steel exposed in the first cavity with a conductor that runs from the sacrificial anode to the steel exposed in the first cavity and
covering the sacrificial anode and the backfill and activating agent in the anode cavity with a profile restoring concrete repair material wherein
the sacrificial anode is an electrode comprising a metal less noble than steel supporting an anodic reaction and
the anodic reaction substantially comprises dissolution of the metal and
the backfill receives the products of sacrificial metal dissolution and
the activating agent is adapted to maintain sacrificial anode activity.

This invention provides in another aspect a combination of an anode and activating agent and backfill adapted for use in a method of repairing a corrosion damaged steel reinforced concrete structure which method comprises
removing the corrosion damaged concrete to expose and clean the corroding steel and to form a first cavity to receive a concrete repair material to restore the profile of the concrete structure and
forming in the concrete exposed within this first cavity a smaller distinct anode cavity for assembling a sacrificial anode assembly and
placing within the anode cavity a pliable viscous ionically conductive backfill and a sacrificial anode and an activating agent to form a sacrificial anode assembly and
connecting the sacrificial anode to the steel exposed in the first cavity with a conductor that runs from the sacrificial anode to the steel exposed in the first cavity and
covering the sacrificial anode and the backfill and activating agent in the anode cavity with a profile restoring concrete repair material wherein
the sacrificial anode is an electrode comprising a metal less noble than steel supporting an anodic reaction and
the anodic reaction substantially comprises dissolution of the metal and
the backfill is stored ready for use in a container adapted to inject the backfill from the container into the anode cavity and
the backfill receives the products of sacrificial metal dissolution and
the activating agent is adapted to maintain sacrificial anode activity and
the anode and the activating agent are assembled together prior to placing the anode and backfill in the anode cavity.

In the first stage of a repair process, cracked and delaminating concrete is removed and a cavity is prepared to receive a concrete repair material. This is referred to as the first cavity. Within this cavity another smaller cavity is formed for the purposes of assembling an anode and backfill. This is distinct from the first cavity and is referred to as the anode cavity. This anode cavity will preferably be a drilled or cored hole. It will have a small volume relative to the first cavity. A typical anode cavity will be no more than 50 mm in diameter and 200 mm in length. Its volume will typically be at least an order of magnitude less than the first cavity. It is preferable to form several anode cavities near the periphery of the first cavity to protect adjacent steel on all sides of the first cavity. It is preferable to embed the anodes at a similar depth to the steel.

A sacrificial anode, activating agent and backfill is then assembled within the anode cavity. The backfill is a pliable, viscous material into which the anode may be inserted. It is ionically conductive. It is preferably a putty. An example is lime putty. It preferably hardens slowly with time to form a weak porous material with a compressive strength of less than 5 N/mm² and more preferably less than 1 N/mm² to accommodate any products from the dissolution of the sacrificial anode. It preferably has a conductivity of less than 20 kOhms-cm and more preferably less than 2 kOhms-cm to promote the flow of current from the sacrificial anode to the surrounding concrete.

In an example of the anode installation process, a backfill is placed in the anode cavity and an anode is inserted into the backfill. It is preferable to partially fill the anode cavity with the backfill and then insert the anode into the backfill. The sacrificial anode is an electrode comprising a metal less noble than steel. The main anodic reaction is metal dissolution. Examples include zinc, aluminium or magnesium or alloys thereof. Zinc and zinc alloys are currently preferred for use in cavities in concrete. The anode shape is adapted for insertion into the backfill in the cavity. Examples include a cylinder, tube or bar. The metal anode may be porous. The anode makes ionic contact with the backfill and the anode reaction includes the dissolution of the sacrificial metal element into the backfill.

Included within the assembly is an activating agent to maintain sacrificial anode activity. This may for example be included with the anode or added to the backfill or applied as a coating to the anode. Examples of activating agents, known in the art are hydroxide and halide ions. It is preferable to include the activating agent with the anode. The activating agent may be applied as a coating to the anode or included within the anode.

A conductor is used to electronically connect the sacrificial anode to the steel and hence allow electrons to flow from the anode to the steel. An example of a conductor is a wire. An uninsulated steel wire is suitable. One end of the wire may be connected to the anode by casting the anode around the wire or by soldering the wire to the anode. The other end of the wire may be connected to the steel by clamping it or tying it to the neighbouring steel exposed by the removal of the corrosion damaged concrete. Other examples of this connection detail are known in the art. For example, monitoring may be facilitated by running an electric cable connected to the steel and another electric cable connected to the anode to monitoring equipment which connects the steel to the anode.

The backfill will preferably have a resistivity that is less than the parent concrete which preferably has a resistivity that is less than the concrete repair material to promote the flow of ionic current off the anode and into the parent concrete. The corrosion risk in concrete increases as the concrete resistivity falls below 20 kOhm-cm. It is therefore preferable that the backfill has a resistivity that is less than this and more preferably less than 2 kOhm-cm.

The backfill preferably accommodates any expansive products arising from the dissolution of the sacrificial metal element. The backfill should therefore have a low compressive strength compared to the tensile strength of the surrounding concrete. It is therefore preferable that the ultimate compressive strength of the backfill does not exceed 5 N/mm² and more preferably does not exceed 1 N/mm².

To accommodate the products of the sacrificial metal reaction the backfill needs to have a fluid filled void or pore space. This will be at least partially filled with electrolyte to facilitate ionic current flow from the sacrificial anode to the parent concrete. The void space may result from shrinkage of the backfill as it hardens slowly. It is preferable that the backfill may be compressed to less than 50 % and more preferably less than 80% of its original volume.

### Brief Description of Drawings

This invention will now be described further with reference by way of example to the drawings in which:
Figure 1 shows a section through a reinforced concrete element that includes a repaired area with sacrificial anodes in two cavities formed within the repaired area.
Figure 2 shows the experimental arrangement used in Example 2 to test the effect of a zinc anode and activating coating and pliable viscous backfill on the protection current delivered from the anode.
Figure 3 shows a section of the steel cathode that was used in Example 2.
Figure 4 shows the galvanic current density output from day 14 onwards of the anode and activating coating in Example 2.

### Examples

### Example1

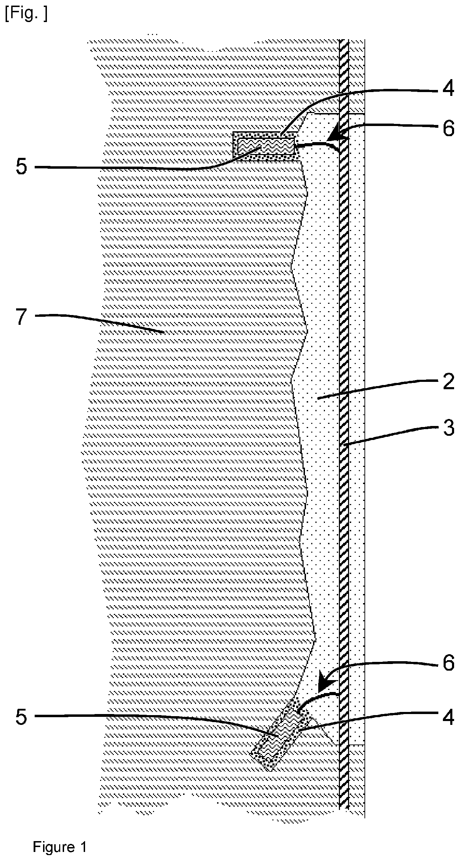

Referring to Figure 1, a reinforced concrete element has been subject to a repair process wherein a cavity [2] is formed by the removal of damaged concrete to receive a profile restoring concrete repair material. At least one steel bar [3] is exposed at the cavity. Within the cavity holes [4] are formed in which to assemble a sacrificial anode assembly. These holes may be formed by drilling or coring. They are located close to the periphery of the repair area to promote current distribution to the steel adjacent to the repair area. The holes formed for the sacrificial anode assembly are substantially smaller than the cavity formed to receive the concrete repair material. A backfill is placed within the holes [4] and sacrificial anodes [5] are inserted into the backfill. A conductor [6] connects the sacrificial anode to the exposed steel bar to allow current to flow by means of electron conduction. The backfill connects the sacrificial metal element to the original or parent concrete [7] to allow ionic current to flow to the steel in the parent concrete. The distribution of current flow to the steel in the parent concrete is not as sensitive to the properties of the profile restoring repair material as would be the case with a preformed anode assembly embedded within the repair material. Indeed in this arrangement a high resistivity repair material would promote the flow of current to the steel in the adjacent parent concrete.

### Example 2

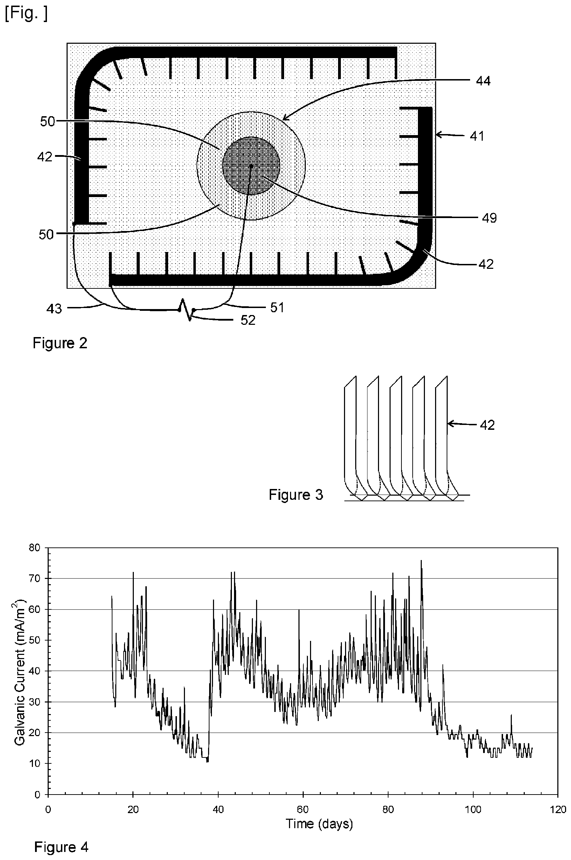

The test arrangement for Example 2 is shown in Figure 2. A cement mortar block [41] 270 mm long by 175 mm wide by 110 mm high was cast using damp sand, Portland cement and water in the weight ratio 4:1:0.8. The mortar was of a relatively poor quality and some bleed water formed on top of the casting. A steel cathode [42] with a surface area of 0.12 m² was positioned in the outer edge of the mortar block during the casting process. The steel cathode was formed from two 300 mm by 100 mm steel shims that were cut and folded to form a set of 20 mm wide by 90 mm long steel strips connected by a 10 mm by 300 mm strip to allow both sides of the steel to receive current during the testing process. A segment of the cut and folded steel cathode is shown in Figure 3. An electric cable [43] was connected to the steel cathode that extended beyond the cement mortar to enable electrical connections to be made to the steel cathode. A hole [44] 40 mm in diameter by 70 mm deep was formed in the centre of the cement mortar block to house a sacrificial anode assembly. The cement mortar block was covered and left for 7 days to cure.

A zinc sacrificial anode was formed by casting a 18 mm diameter, 40 mm long bar of zinc around a titanium wire. The bar diameter reduced near its end and the anode surface area was 0.0023 m². A salt paste consisting of a starch based wall paper paste and table salt (primarily sodium chloride) in equal volumes was mixed up and applied to the outer zinc surface of the zinc anode. The zinc anode was then baked in an oven at 240C for 15 minutes to dry the salt paste and form a crusty layer of salt on the zinc surface. The purpose of the salt-starch coating was to provide an activating agent for the zinc anode.

After the cement mortar specimen had cured for 7 days, the 40 mm diameter hole in the centre of the specimen was partially filled with lime putty [50]. The lime putty had been stored in a sealant cartridge that included a movable piston. The putty was injected into the hole through a nozzle at the end of the cartridge by applying pressure to the movable piston using a hand held sealant gun. The zinc sacrificial anode [49] was inserted into the lime putty. The sacrificial anode and the putty filled approximately 85% of the hole. The sacrificial anode was connected to the steel cathode through an electric cable [51] and a 100 ohm resistor [52] and the galvanic current was measured by recording the voltage drop across the resistor.

Initially the wet specimen delivered a high current which decayed as the putty started to dry and harden. After about 15 days the initial decay had largely subsided. After 6 days, the sacrificial anode assembly was covered with cement mortar which filled the remainder of the hole [44]. The specimen was placed outside and exposed to the weather of the UK midlands. The weather was initially sunny and dry with direct sunlight falling on the specimen in the late afternoon and the specimen was drying fairly rapidly. This was followed by more variable weather consisting of cold fronts, clouds, rain and sunshine.

The galvanic current from the specimen between days 14 and 116 is given in Figure 4. The data shows that a current density of between 10 and 80 mA/m² may be sustained on a zinc anode. The variations in current output were primarily the result of variations in temperature with daily variations causing the current to cycle over a period of one day. The effect of wetting the specimen as the result of rain is a slower process.

Temperature and moisture also affect corrosion risk and the current output of the anode responds positively to corrosion risk. BS EN 12696:2000 suggests that cathodic prevention current densities range between 0.2 and 2 mA/m² of steel surface area. The data in Figure 4 suggests that one anode may therefore provide cathodic prevention to a surface area of steel that is up to 50 times the anode surface area.

## Claims

1. A method of repairing a corrosion damaged steel reinforced concrete structure which comprises
removing the corrosion damaged concrete to expose and clean the corroding steel and to form a first cavity to receive a concrete repair material to restore the profile of the concrete structure and
forming in the concrete exposed within this first cavity a smaller distinct anode cavity for assembling a sacrificial anode assembly and
placing within the anode cavity a pliable viscous ionically conductive backfill and a sacrificial anode and an activating agent to form a sacrificial anode assembly and connecting the sacrificial anode to the steel exposed in the first cavity with a conductor that runs from the sacrificial anode to the steel exposed in the first cavity and
covering the sacrificial anode and the backfill and activating agent in the anode cavity with a profile restoring concrete repair material wherein
the sacrificial anode is an electrode comprising a metal less noble than steel supporting an anodic reaction and
the anodic reaction substantially comprises dissolution of the metal and
the backfill receives the products of sacrificial metal dissolution and
the activating agent is adapted to maintain sacrificial anode activity.

2. A method as claimed in claim 1 wherein the anode cavity is formed by coring or drilling.

3. A method as claimed in any of claims 1 to 2 wherein the anode cavity has a volume that is at least one order of magnitude less than the cavity that accommodates the concrete repair material.

4. A method as claimed in any of claims 1 or 3 wherein the resistivity of the profile restoring repair material is at least double the resistivity of the concrete surrounding the sacrificial anode assembly.

5. A method as claimed in any of claims 1 to 4 wherein a bonding agent that substantially comprises polymers is used to enhance the bond between the profile restoring repair material and the concrete and the bonding agent inhibits the flow of current between the profile restoring repair material and the concrete.

6. A method as claimed in any of claims 1 to 5 wherein the backfill is stored ready for use in a container adapted to inject the backfill from the container into the anode cavity by applying pressure to the container.

7. A method as claimed in claim 6 wherein the backfill has a shelf life of at least 1 month.

8. A method as claimed in any of claims 1 to 7 wherein the backfill is a putty.

9. A method as claimed in any of claims 1 to 8 wherein the anode is inserted into the backfill.

10. A method as claimed in any of claims 1 of 9 wherein the anode and the activating agent are assembled together prior to placing the anode and backfill in the anode cavity.

11. A method as claimed in claim 10 wherein the activating agent is applied as a coating to the anode.

12. A repaired, steel reinforced concrete structure comprising:
a first cavity in the steel-reinforced concrete structure;
a smaller distinct anode cavity within the concrete exposed in the first cavity;
a sacrificial anode assembly located within the anode cavity, the sacrificial anode assembly comprising a sacrificial anode, a pliable viscous ionically conductive backfill and an activating agent;
a conductor connecting the sacrificial anode to steel exposed within the first cavity;
a profile restoring concrete repair material covering the sacrificial anode, the backfill and the activating agent in the anode cavity;
wherein the sacrificial anode is an electrode comprising a metal less noble than steel supporting an anodic reaction, wherein the anodic reaction substantially comprises dissolution of the metal, wherein the backfill is adapted to receive the products of the dissolution of the metal, and wherein the activating agent is adapted to maintain sacrificial anode activity.

## Patentansprüche

1. Verfahren zum Reparieren einer korrosionsgeschädigten stahlverstärkten Betonkonstruktion, umfassend
ein Entfernen eines korrosionsgeschädigten Betons, um einen korrodierenden Stahl freizulegen und zu reinigen und einen ersten Hohlraum auszubilden, um ein Betonreparaturmaterial zu empfangen, um ein Profil der Betonkonstruktion wiederherzustellen, und
Ausbilden eines kleineren ausgeprägten Anodenhohlraums für ein Zusammenfügen einer Opferanodenanordnung in dem innerhalb dieses ersten Hohlraums freiliegenden Beton und Platzieren einer nachgiebigen viskosen, ionisch leitfähigen Hinterfüllung und einer Opferanode und eines Aktivators innerhalb des Anodenhohlraums, um eine Opferanodenanordnung auszubilden, und Verbinden der Opferanode mit dem in dem ersten Hohlraum freiliegenden Stahl mit einem Leiter, der von der Opferanode zu dem in dem ersten Hohlraum freigelegten Stahl verläuft, und
Bedecken der Opferanode und der Hinterfüllung und des Aktivators in dem Anodenhohlraum mit einem profilwiederherstellenden Betonreparaturmaterial, wobei
die Opferanode eine Elektrode ist, die ein Metall umfasst, das weniger edel ist als Stahl, das eine anodische Reaktion unterstützt, und
die anodische Reaktion im Wesentlichen ein Auflösen des Metalls umfasst, und die Hinterfüllung Erzeugnisse der Opfermetallauflösung empfängt und der Aktivator geeignet ist, die Opferanodenaktivität aufrechtzuerhalten.

2. Verfahren nach Anspruch 1, wobei der Anodenhohlraum durch Kernbohren oder Bohren ausgebildet ist.

3. Verfahren nach einem der Ansprüche 1-2, wobei der Anodenhohlraum ein Volumen aufweist, das wenigstens eine Größenordnung geringer ist als der Hohlraum, der das Betonreparaturmaterial aufnimmt.

4. Verfahren nach einem der Ansprüche 1 oder 3, wobei der spezifische Widerstand des profilwiederherstellenden Reparaturmaterials wenigstens das Doppelte des spezifischen Widerstands des Betons ist, der die Opferanodenanordnung umgibt.

5. Verfahren nach einem der Ansprüche 1-4, wobei ein Haftmittel, das im Wesentlichen Polymere umfasst, verwendet wird, um einen Verbund zwischen dem profilwiederherstellenden Reparaturmaterial und dem Beton zu erhöhen, und das Haftmittel einen Stromfluss zwischen dem profilwiederherstellenden Reparaturmaterial und dem Beton hemmt.

6. Verfahren nach einem der Ansprüche 1-5, wobei die Hinterfüllung gebrauchsfertig in einem Behälter gelagert ist, der geeignet ist, die Hinterfüllung durch ein Aufbringen eines Drucks auf den Behälter aus dem Behälter in den Anodenhohlraum einzupressen.

7. Verfahren nach Anspruch 6, wobei die Hinterfüllung eine Haltbarkeit von wenigstens 1 Monat hat.

8. Verfahren nach einem der Ansprüche 1-7, wobei die Hinterfüllung eine Spachtelmasse ist.

9. Verfahren nach einem der Ansprüche 1-8, wobei die Anode in die Hinterfüllung eingesetzt ist.

10. Verfahren nach einem der Ansprüche 1 von 9, wobei die Anode und der Aktivator zusammengefügt sind, bevor die Anode und die Hinterfüllung in dem Anodenhohlraum platziert werden.

11. Verfahren nach Anspruch 10,
wobei der Aktivator als eine Beschichtung auf die Anode aufgebracht wird.

12. Reparierte, stahlverstärkte Betonkonstruktion, umfassend:
einen ersten Hohlraum in der stahlverstärkten Betonkonstruktion;
einen kleineren ausgeprägten Anodenhohlraum innerhalb des in dem ersten Hohlraum freiliegenden Betons;
eine Opferanodenanordnung, die sich innerhalb des Anodenhohlraums befindet, wobei die Opferanodenanordnung eine Opferanode, eine nachgiebige viskose, ionisch leitfähige Hinterfüllung und einen Aktivator umfasst;
einen Leiter, der die Opferanode mit dem innerhalb des ersten Hohlraums freiliegenden Stahl verbindet;
ein profilwiederherstellendes Betonreparaturmaterial, das die Opferanode, die Hinterfüllung und den Aktivator in dem Anodenhohlraum bedeckt;
wobei die Opferanode eine Elektrode ist, die ein Metall umfasst, das weniger edel ist als Stahl, das eine anodische Reaktion unterstützt, wobei die anodische Reaktion im Wesentlichen das Auflösen des Metalls umfasst, wobei die Hinterfüllung geeignet ist, die Erzeugnisse der Auflösung des Metalls zu empfangen, und wobei der Aktivator geeignet ist, die Opferanodenaktivität aufrechtzuerhalten.

## Revendications

1. Procédé de réparation d'une structure en béton armé endommagée par la corrosion comprenant :
l'enlèvement du béton endommagé par la corrosion pour exposer et nettoyer l'acier corrodé et pour former une première cavité pour recevoir un matériau de réparation de béton afin de restaurer le profil de la structure en béton et
la formation, dans le béton exposé à l'intérieur de cette première cavité, d'une cavité d'anode distincte plus petite pour assembler un ensemble anode sacrificielle et
le placement à l'intérieur de la cavité d'anode d'un matériau de remplissage conducteur ionique visqueux et malléable et d'une anode sacrificielle et d'un agent d'activation pour former un ensemble anode sacrificielle et connecter l'anode sacrificielle à l'acier exposé dans la première cavité à l'aide d'un conducteur passant de l'anode sacrificielle à l'acier exposé dans la première cavité et
le recouvrement de l'anode sacrificielle et du matériau de remplissage et de l'agent d'activation dans la cavité d'anode avec un matériau de réparation de béton permettant de restaurer le profil,
l'anode sacrificielle étant une électrode comprenant un métal moins noble que l'acier supportant une réaction anodique et
la réaction anodique comprenant essentiellement la dissolution du métal, le matériau de remplissage recevant les produits de la dissolution du métal sacrificiel, l'agent d'activation étant conçu pour maintenir l'activité de l'anode sacrificielle.

2. Procédé selon la revendication 1, dans lequel la cavité d'anode est formée par carottage ou forage.

3. Procédé selon l'une quelconque des revendications 1 à 2, dans lequel la cavité d'anode a un volume inférieur d'au moins un ordre de grandeur à celui de la cavité recevant le matériau de réparation de béton.

4. Procédé selon l'une quelconque des revendications 1 ou 3, dans lequel la résistivité du matériau de réparation permettant de restaurer le profil est d'au moins le double de la résistivité du béton entourant l'ensemble anode sacrificielle.

5. Procédé selon l'une quelconque des revendications 1 à 4, dans lequel un agent de liaison comprenant essentiellement des polymères est utilisé pour renforcer la liaison entre le matériau de réparation permettant de restaurer le profil et le béton, et l'agent de liaison inhibe la circulation du courant entre le matériau de réparation permettant de restaurer le profil et le béton.

6. Procédé selon l'une quelconque des revendications 1 à 5, dans lequel le matériau de remplissage est stocké prêt à l'emploi dans un contenant conçu pour injecter le matériau de remplissage du contenant dans la cavité d'anode en appliquant une pression sur le contenant.

7. Procédé selon la revendication 6, dans lequel le matériau de remplissage a une durée de conservation d'au moins 1 mois.

8. Procédé selon l'une quelconque des revendications 1 à 7, dans lequel le matériau de remplissage est un mastic.

9. Procédé selon l'une quelconque des revendications 1 à 8, dans lequel l'anode est insérée dans le matériau de remplissage.

10. Procédé selon l'une quelconque des revendications 1 à 9, dans lequel l'anode et l'agent d'activation sont assemblés ensemble avant le placement de l'anode et du le matériau de remplissage dans la cavité d'anode.

11. Procédé selon la revendication 10,
dans lequel l'agent d'activation est appliqué en tant que revêtement sur l'anode.

12. Une structure en béton armé, réparée, comprenant :
une première cavité dans la structure en béton armé ;
une cavité d'anode distincte plus petite à l'intérieur du béton exposé dans la première cavité ;
un ensemble anode sacrificielle situé à l'intérieur de la cavité d'anode, l'ensemble anode sacrificielle comprenant une anode sacrificielle, un matériau de remplissage conducteur ionique visqueux et malléable et un agent d'activation ;
un conducteur connectant l'anode sacrificielle à l'acier exposé à l'intérieur de la première cavité ;
un matériau de réparation de béton permettant de restaurer le profil recouvrant l'anode sacrificielle, le matériau de remplissage et l'agent d'activation dans la cavité d'anode ;
l'anode sacrificielle étant une électrode comprenant un métal moins noble que l'acier supportant une réaction anodique, la réaction anodique comprenant essentiellement la dissolution du métal, le matériau de remplissage étant conçu pour recevoir les produits de la dissolution du métal, l'agent d'activation étant conçu pour maintenir l'activité de l'anode sacrificielle.
